# EUROPÄISCHE PATENTSCHRIFT

(11) **EP 2 233 551 B1**
(45) Veröffentlichungstag und Bekanntmachung des Hinweises auf die Patenterteilung: **01.02.2012**
(21) Anmeldenummer: 09004357.1
(22) Anmeldetag: 26.03.2009
(51) Int. Cl.: C10J 3/12, C10J 3/66, C10B 49/18

(54) **Verfahren und Vorrichtung zur Vergasung von organischen Materialien**
Method and device for introducing gas to organic material
Procédé et dispositif de gazage de matériaux organiques

(43) Veröffentlichungstag der Anmeldung: 29.09.2010
(73) Patentinhaber: Marold, Freimut Joachim, 46282 Dorsten (DE)
(72) Erfinder: Freimut, Marold, 46282 Dorsten (DE); Petersen, Jens, 46514 Schermbeck/Gahlen (DE)
(74) Vertreter: Nunnenkamp, Jörg

(56) Entgegenhaltungen:
- EP-B- 1 226 222
- DE-B- 1 090 632
- DE-C- 966 005
- US-A- 2 590 869
- DIMOVA T ET AL: "DIE GESTUFTE REFORMIERUNG - EIN NEUES VERFAHREN ZUR GEWINNNUNG VON ENERGIE UND WASSERSTOFF AUS BIOGENEN RESTSTOFFEN" DGMK TAGUNGSBERICHT, HAMBURG, DE, Bd. 1, 1. Januar 2000 (2000-01-01), Seiten 39-46, XP008000527 ISSN: 1433-9013

## Beschreibung

Die Erfindung betrifft ein Verfahren und eine Vorrichtung zur Vergasung von organischen Materialien, wie z. B. Kunststoffen, Ersatzbrennstoffen und speziell von Biomasse, mit folgenden Verfahrensschritten:
- ein Wärmeträgermedium auf Feststoffbasis durchläuft in dieser Reihenfolge eine Heizzone, eine Reformerzone und eine Thermolysezone und wird anschließend in die Heizzone zurückgeführt;
- in der Thermolysezone wird das hier zugeführte organische Material durch Wärmekontakt mit dem Wärmeträgermedium in zumindest ein Produktgas und ein oder mehrere kohlenstoffhaltige Rückstände aufgespalten;
- das im Gegenstrom zum Wärmeträgermedium geführte Produktgas wird anschließend in der Reformerzone mittels zugeführten Wasserdampfs reformiert und als Nutzgas bzw. Synthesegas abgezogen.

In der vorliegenden Anmeldung geht es also speziell um die Vergasung organischer Materialien, also von kohlenstoffhaltigen bzw. kohlenwasserstoffhaltigen Stoffen und Stoffgemischen. Hierzu gehören Kunststoffe, Ersatzbrennstoffe etc. und im speziellen Biomasse. Die Vergasung solcher Materialien basiert primär auf dem Vorgang der Pyrolyse und speziell der Thermolyse. Dabei bezeichnet die Thermolyse wie üblich die thermische Spaltung der organischen Verbindungen der Biomasse im Beispielfall. In diesem Zusammenhang wird die Biomasse oder allgemein das organische Material hohen Temperaturen von im Bereich zwischen 500°C bis 700 °C ausgesetzt, so dass ein Bindungsbruch innerhalb der die Biomasse oder allgemein das organische Material primär bildenden großen Moleküle erzwungen wird. Die Pyrolyse bzw. Thermolyse wird meistens unter weitgehendem Sauerstoffabschluss, d. h. überwiegend anaerob, durchgeführt, um eine etwaige Verbrennung der Biomasse zu verhindern.

Unter Biomasse wird allgemein die Gesamtheit der Masse an organischem Material in einem definierten Ökosystem verstanden, welches biochemisch synthetisiert wurde. Im Speziellen wird die Vergasung von pflanzlicher Biomasse und hier insbesondere von Holz, Holzschnitt, minderwertigem Grünschnittholz, Holzresten etc. betrachtet, Insofern ist im Oberbegriff auch von einer Thermolysezone und demzufolge einer Thermolyse die Rede. Denn bei der Thermolyse handelt es sich um eine spezielle Pyrolyse bzw. spezielle thermische Zersetzung, die gezielt zur Darstellung definierter Produkte eingesetzt wird. Das ist unter anderem deshalb möglich, weil im Allgemeinen nicht jedwede Biomasse vergast wird, sondern speziell Schnittholz. Selbstverständlich ist die Erfindung hierauf nicht eingeschränkt.

Bei der Pyrolyse im Allgemeinen und der Thermolyse im Speziellen entwickeln sich unter weitgehendem Luftabschluss aus beispielsweise dem Holzschnitt bei Temperaturen um ca. 700°C spezielle Produktgase, wie z. B. Kohlendioxid (CO₂) Kohlenmonoxid (CO), Methan (CH₄), und Wasserstoff (H₂). Neben diesem einen oder den mehreren Produktgasen entstehen kohlenstoffhaltige Rückstände in Gestalt von kurzkettigen Kohlenwasserstoffen, Holzteer, Koks etc.

Aus dem Produktgas wird anschließend durch Dampfreformierung in der Reformerzone das Nutzgas bzw. Synthesegas erzeugt. Bei diesem Vorgang wird beispielsweise Methan und Wasser bzw. Wasserdampf in Kohlenmonoxid und Wasserstoff umgesetzt. Hierbei handelt es sich üblicherweise um den ersten Prozessschritt bei der Dampfreformierung. Dadurch stehen ausgangsseitig der Reformerzone im Wesentlichen Kohlenmonoxid und Wasserstoff als Nutzgase bzw. Synthesegase zur Verfügung, die unmittelbar und problemlos beispielsweise für die elektrische Energieerzeugung herangezogen werden können. Es ist aber auch möglich, im Zuge der Dampfreformierung unter Berücksichtigung eines zweiten Prozessschrittes (Shift-Reaktion) die Wasserstoffausbeute zu steigern. Dann wird Kohlenmonoxid in Verbindung mit Wasserstoff zu Kohlendioxid und Wasserstoffgas umgewandelt. Diese Shift-Reaktion muss jedoch nicht notwendigerweise und vollständig durchlaufen werden, weil das bereits nach dem ersten Prozessschritt der Dampfreformierung überwiegend zur Verfügung stehende Kohlenmonoxid und der Wasserstoff vorteilhaft zur elektrischen Energieerzeugung herangezogen werden können. - So wird meistens bei dem nachfolgend beschriebenen Prozess vorgegangen.

Für den erforderlichen Wärmeeintrag in die Biomasse sorgt vorliegend das im Kreislauf geführte Wärmeträgermedium auf Feststoffbasis. Das Wärmeträgermedium durchläuft zunächst die Heizzone und wird hier aufgeheizt. Danach wird die Reformerzone und anschließend die Thermolysezone bzw. Pyrolysezone durchlaufen. Zum Abschluss wird das Wärmeträgermedium in die Heizzone zurückgeführt. Durch den Kontakt der Biomasse mit dem Wärmeträgermedium in der Thermolysezone wird der beschriebene Prozess der Thermolyse in Gang gesetzt. Außerdem sorgt das Wârmeträgermedium dafür, dass der Wasserdampf die notwendige Temperatur in der Reformerzone aufweist.

Beim gattungsgemäßen Verfahren entsprechend der EP 1 226 222 B1 wird der gesamte feste, kohlenstoffhaltige Rückstand aus der Thermolysezone einer gesonderten Feuerung zugeführt und dort verbrannt. Tatsächlich finden sich diese kohlenstoffhaltigen Rückstände beispielsweise am Wärmeträgermedium und können hier zu Verbackungsproblemen führen. Denn bei dem Wärmeträgermedium handelt es sich beispielsweise um Kugeln aus Stahl, Keramik oder dergleichen. Solche Anbackungen führen dazu, dass der Wärmeübertrag vom Wärmeträgermedium auf die Biomasse reduziert ist und folgerichtig die Pyrolyse bzw. Thermolyse unvollständig oder überhaupt nicht mehr abläuft.

Aus diesem Grund sieht die bekannte Lehre nach der EP 1 226 222 B1 eine Trennstufe ausgangsseitig eines Pyrolysereaktors vor, die mit einer Schleusen- und Fördereinheit ausgerüstet ist, um das Wärmeträgermedium ohne unkontrollierte Luftzufuhr aus dem Pyrolysereaktor zu entfernen und für die nachträgliche Aufbereitung vorzubereiten. Die Trennung des Wärmeträgermediums von den festen kohlenstoffhaltigen Rückständen nach Verlassen der Pyrolysezone erfolgt in der Regel pneumatisch mit Hilfe einer Windsichtung. Die kohlenstoffhaltigen Rückstände werden in einer gesonderten Feuerung verbrannt. Außerdem werden die Abgase dieser Feuerung genutzt, um die Schüttung des Wärmeträgermediums in einer Aufheizzone mit der gewonnenen Abwärme zu beaufschlagen.

Der beschriebene Stand der Technik führt zwar zu ordentlichen Ergebnissen bei der Vergasung der Biomasse, allerdings ist der anlagentechnische Aufwand enorm. Denn die einzelnen Zonen, nämlich die Heizzone, die Reformerzone und die Thermolysezone sind streng mechanisch voneinander getrennt und werden in einzelnen Reaktoren ausgebildet, nämlich einem Aufheizreaktor, einem Reformerreaktor und schließlich einem Pyrolysereaktor, die voneinander durch einzelne Schleusen separiert sind. Diese Schleusen müssen von dem Wärmeträgermedium passiert werden, was zu Funktionsbeeinträchtigungen führen kann.

Ein ähnlich aufwendiger apparativer Aufbau wird in der DE 100 55 360 B4 verfolgt. Vergleichbares gilt für die DE 197 55 693 C1.

Darüber hinaus kennt man durch die DE 971 789 ein Verfahren zur stetigen Stadtgaserzeugung aus Ölen. Dabei werden Brennstoffe geringer Backfähigkeit umlaufenden festen Wärmeträgern zugemischt und hierbei entgast. Die Entgasungserzeugnisse werden durch thermische Behandlung mit den festen Wärmeträgern umgewandelt. Auch in diesem Fall sind eine getrennte Gasfeuerung, ein Reaktionsraum und schließlich ein Entgasungsraum verwirklicht, die durch Schleusen voneinander getrennt sind.

Sofern ein apparativ wenig aufwendiger Aufbau entsprechend der DE 197 36 867 C2 verfolgt wird, wird die Vergasung in einer stationären Wirbelschicht unter Druck und mit einem im Wesentlichen Wasserdampf enthaltenden Vergasungsmittel durchgeführt. Diese so genannte Wirbelschichtvergasung ist insofern nachteilig, als der Betrieb der Wirbelschichten sehr aufwendig ist und eine Steuerung der Reaktionen der entstehenden Produktgase kaum möglich ist. Hier will die Erfindung insgesamt Abhilfe schaffen.

Der Erfindung liegt das technische Problem zugrunde, ein Verfahren der eingangs beschriebenen Ausprägung so weiter zu entwickeln, dass unter Berücksichtigung einer verfahrens- und vorrichtungsmäßig einfachen Ausgestaltung zugleich die Ausbeute an Nutzgas bzw. Synthesegas erhöht ist bzw. im Vergleich zum Stand der Technik zumindest gleich bleibt.

Zur Lösung dieser Aufgabenstellung schlägt die Erfindung bei einem gattungsgemäßen Verfahren vor, dass sämtliche drei Zonen, d. h. die Heizzone, die Reformerzone und die Thermolysezone, in einem gemeinsamen Vergasergehäuse ausgebildet werden, wobei zwischen den einzelnen Zonen jeweils Übergangszonen realisiert sind und im Bereich dieser Übergangszonen wenigstens eine Schikane sich befindet, mit deren Hilfe ein von einem Sperrgas beaufschlagter Freiraum in dem Wärmeträgermedium ausgebildet wird, so dass die einzelnen Zonen barrierefrei ineinander übergehen und lediglich bedarfsweise durch das Zusammenspiel des Wärmeträgermediums mit jeweils dem Sperrgas voneinander getrennt werden.

Im Rahmen der Erfindung werden also die Heizzone, die Reformerzone und die Thermolysezone ausdrücklich nicht durch Schleusen oder andere mechanische Banieren bzw. Konstruktionen voneinander getrennt, sondern gehen barrierefrei ineinander über. Um dennoch die Prozesse in den einzelnen Zonen voneinander bedarfsweise trennen zu können, kommt es im Bereich einer jeweiligen Übergangszone zum Zusammenspiel zwischen dem Wärmeträgermedium und jeweils einem Sperrgas (oder einem Sperrgasgemisch).

Tatsächlich sind unter Berücksichtigung der drei Zonen, der Heizzone, der Reformerzone und der Thermolysezone insgesamt zwei Übergangszonen vorgesehen, und zwar einerseits zwischen der Heizzone und der Reformerzone und andererseits zwischen der Reformerzone und der Thermolysezone. Diese beiden Übergangszonen können nun - entweder die eine Übergangszone oder beide Übergangszonen - jeweils für eine Trennung der benachbarten Zonen voneinander je nach Bedarf sorgen. So lässt sich beispielsweise die Heizzone von der Reformerzone ebenso durch das Zusammenspiel des Wärmeträgermediums mit dem Sperrgas trennen, wie die Reformerzone von der Thermolysezone. Das gelingt sämtlich und durchgängig erfindungsgemäß ohne durchgängige mechanische Barrieren bzw. Schleusen. Dadurch lassen sich die drei beschriebenen Zonen inklusive der Übergangszonen zwischen ihnen in einem gemeinsamen Vergasergehäuse anordnen, was den apparativen Aufwand im Vergleich zum Stand der Technik bereits enorm verringert.

Um die Trennung der Zonen im Detail zu realisieren, wird das Wärmeträgermedium im Bereich der Übergangszone von einer ersten zur benachbarten zweiten Zone über wenigstens eine Schikane geführt. Diese Schikane dient dabei lediglich dazu, den Strom des Wärmeträgermediums durch das Vergasergehäuse gezielt zu beeinflussen und zu richten, und zwar in dem zumindest ein von dem Sperrgas beaufschlagter bzw. beaufschlagbarer Freiraum ausgebildet wird. Anders ausgedrückt, führt die eine oder führen die mehreren Schikanen im Bereich der Übergangszone dazu, dass in dem ansonsten geschlossenen wandernden Bett des Wärmeträgermediums ein oder mehrere Freiräume gezielt ausgebildet werden. Dieser eine oder die mehreren Freiräume können dann mit dem Sperrgas beaufschlagt werden.

Im Regelfall erstreckt sich dabei der Freiraum bis zum Rand des bereits angesprochenen und gemeinsamen Vergasergehäuses. Außerdem ist der Freiraum im Allgemeinen ringförmig ausgebildet, so dass hierdurch ein Ringverteiler in der Übergangszone im Innern des Vergasergehäuses entsteht. Diese ringförmige Ausbildung erklärt sich aufgrund der rotationssymmetrischen Auslegung des Vergasergehäuses und der Schikane, die beide konzentrisch im Vergleich zu einer gemeinsamen Zentralachse ausgebildet sind.

Selbstverständlich umfasst die Erfindung auch hiervon abweichende Auslegungen des Vergasergehäuses, beispielsweise ovale Ausführungsformen oder auch nicht rotationssymmetrische Vergasergehäuse bzw. Schachtöfen. In diesem Fall bildet der Ringverteiler natürlich nach wie vor einen mehr oder minder geschlossenen Ring, der jedoch eine dem Schachtgehäuse bzw. Vergasergehäuse folgende Gestaltung aufweist.

An dem beschriebenen Freiraum bzw. den Ringverteiler wird vorteilhaft eine Zuleitung für das Sperrgas und/oder andere Gase angeschlossen.

In jedem Fall kann der jeweilige Freiraum genutzt werden, um problemlos ein Gas oder auch Feststoffe in das Wanderbett aus den meistens kugelförmigen Wärmeträgerkörpem einbringen zu können. Tatsächlich handelt es sich bei dem Wärmeträgermedium meistens um eine Schüttung aus kugelförmigen oder zumindest rieselfähigen sowie hitzebeständigen Festkörpern. Diese mögen beispielsweise aus Stahl, Keramik, Calciumaluminat etc. gefertigt sein. Entscheidend ist ihre Rieselfähigkeit und Hitzebeständigkeit, weil die Wärmeträgerkörper in der Aufheizzone regelmäßig auf Temperaturen von ca. 1000°C (bis 1200 °C) erhitzt werden.

Zu Beginn des einzuleitenden Vergasungsprozesses wird das Wärmeträgermedium zunächst in einem Anfahrprozess und ohne Zufuhr von Biomasse auf seine Betriebstemperatur erhitzt (im Beispielfall ca. 1000 °C). Erst wenn diese Betriebstemperatur des Wärmeträgermediums erreicht ist, wird die Biomasse zur Vergasung zugeführt. Dabei mag die Biomasse ebenfalls in einen durch eine oder mehrere Schikanen gebildeten Freiraum in der Thermolysezone zugeführt werden. Das kann mit Hilfe eines herkömmlichen Schneckenförderers oder eines anderen Förderers erfolgen. Auch der Transport des Wärmeträgermediums von der Thermolysezone zurück in die Heizzone wird im Allgemeinen durch einen oder mehrere Schneckenförderer bewerkstelligt. Diese lassen sich in einem luftdicht an das Vergasergehäuse angeschlossenen Rohr problemlos betreiben, so dass das Vergasergehäuse inklusive der Zuleitungen und des Kreislauftransportes für das Wärmeträgermedium gegenüber dem Luftsauerstoff abgeschlossen ist. Dadurch kann insgesamt eine unkontrollierte Verbrennung nicht stattfinden.

Eine etwaige Entsorgung von kohlenwasserstoffhaltigen Schlämmen oder auch Schüttgütern kann parallel zur Vergasung an geeigneter Stelle stattfinden. Meistens wird man hierbei auf einen Ort außerhalb des Vergasungsprozesses bzw. außerhalb des Vergasergehäuses zurückgreifen. Bei der Entsorgung lassen sich eventuelle und bei der Vergasung entstehende kalorische Gase nutzen. Diesen können Zuschlagsstoffe zur Bindung von Schadstoffen zugegeben werden.

Im Zuge des Anfahrprozesses können beispielsweise externe Brennstoffe in die Aufheizzone zugeführt werden. Bei diesen externen Brennstoffen mag es sich um beispielsweise ein Brenngas, aber auch feste Brennstoffe wie Koks oder Kohle oder auch um Öl handeln. Diese sämtlichen Brennstoffe werden in der Heizzone verbrannt und führen in Verbindung mit dem in Kreislauf geführten Wärmeträgermedium dazu, dass das Wärmeträgermedium bzw. die an dieser Stelle eingesetzten und als Wanderbett im Kreislauf geführten Wärmeträgerkörper sukzessive die erforderliche Betriebstemperatur erreichen. Das kann sensorisch durch einzelne in Längsrichtung entlang des Vergasergehäuses vorgesehene Temperatursensoren erfasst werden. Ist die Betriebstemperatur erreicht, so wird die Biomasse der Thermolysezone zugeführt. In der Thermolysezone stellen die Wärmeträgerkörper die notwendige Wärmeenergie für die Thermolyse bereit. Außerdem sorgen die Wärmeträgerkörper natürlich auch dafür, dass die für den Wasserstoffreformierungsprozess in der darüber angeordneten Reformerzone notwendigen Temperaturen erreicht werden.

Durch die geometrische Form der Wärmeträgerkörper, welche im Allgemeinen einen Durchmesser von ca. 5 mm bis 10 mm aufweisen, entstehen in der Schüttung sehr viele und sehr kleine Reaktionsräume für die Thermolyse. Selbstverständlich werden von der Erfindung nicht nur kugelförmige Wärmeträgerkörper umfasst, sondern letztlich rieselfähige Körper praktisch beliebiger räumlicher Gestalt. So oder so trägt der zuvor angegebene Durchmesser bzw. die Dimensionierung der Wärmeträgerkörper der Größe der zu verarbeitenden Partikel der Biomasse oder allgemein der organischen Materialien Rechnung. Denn die fraglichen Partikel sind regelmäßig von ihrer Größe her so eingestellt, dass sie in Zwischenräumen bzw. in den Reaktionsräumen zwischen den Wärmeträgerkörpem in der Schüttung Platz finden. Aufgrund geometrischer Überlegungen ergibt sich, dass die Partikel in der Regel nicht größer als die Hälfte des Durchmessers der Wärmeträgerkörper gemessen werden dürfen, also letztlich kleiner oder gleich dem Radius der Wärmeträgerkörper zu gestalten sind. Das kann durch einen vorgeschalteten Häcksel- oder Zerkleinerungsschritt erfolgen. Sind die Wärmeträgerkörper kleiner als zuvor vorgeschlagen, so führen sie zu einem starken Druckverlust des in der Thermolysezone erzeugten Produktgases, welches in Richtung auf die darüber befindliche Reformerzone angesaugt wird. Ist dagegen der Durchmesser der Wärmeträgerkörper zu groß, so wird hierdurch die Dichtigkeit des umlaufenden Wanderbettes aus den Wärmeträgerkörpern bzw. der wandemden Schüttung negativ beeinflusst, so dass sich die einzelnen Zonen trotz des Sperrgases nicht mehr einwandfrei voneinander trennen lassen.

Jedenfalls stellen die sich zwischen den einzelnen und zumeist kugelförmigen Wärmeträgerkörpern zwangsläufig bildenden Hohlräume die bereits angesprochenen Reaktionsräume für die Thermolyse zur Verfügung, Gleichzeitig behindern die Wärmeträgerkörper zu gewissem Grade den freien Gasstrom des sich entwickelnden Produktgases. Dadurch kann beispielsweise sichergestellt werden, dass das von der Thermolysezone in die Reformerzone aufsteigende Produktgas nicht bis in die über der Reformerzone angeordnete Heizzone gelangt. Denn hierfür sorgt die Schüttung aus den meistens kugelförmigen Wärmeträgerkörpem in Verbindung mit dem Freiraum bzw. dem Ringverteiler in der Übergangszone zwischen der Reformerzone und der Heizzone. Dadurch, dass dieser Ringverteiler bzw. der Freiraum mit einem (inerten) Sperrgas beaufschlagt wird, wird verhindert, dass das Produktgas bis in die Heizzone gelangt. Folgerichtig kann das Produktgas bzw. Synthesegas aus der Reformerzone zur weiteren Verwendung abgezogen werden.

Dabei ist die Auslegung insgesamt so getroffen, dass sich das praktisch fußseitig in dem Vergasergehäuse in der dortigen Thermolysezone bildende Produktgas nach oben hin in Richtung auf die Heizzone angesaugt wird, während die Wärmeträgerkörper das Vergasergehäuse im Gegenstrom in Längsrichtung passieren, und zwar infolge Gravitation.

Das in die Reformerzone geförderte Produktgas wird - wie oben bereits beschrieben - durch das eine oder die mehreren Sperrgase von der Heizzone gasseitig getrennt. Dabei kann mit Hilfe einer weiteren Schikane im Bereich der Reformerzone oder zwischen der Reformerzone und der Thermolysezone ein Freiraum bzw. Ringkanal geschaffen werden, über den mit Hilfe einer Zuleitung Dampf zugeführt wird. Meistens wird diese Schikane in der Übergangszone zwischen der Reformerzone und der Thermolysezone realisiert, um den sich dort bildenden Freiraum sowohl für die Zufuhr von Sperrgas als auch von Wasserdampf nutzen zu können.

Jedenfalls werden in der Reformerzone das eine oder die mehreren Produktgase wie bereits geschrieben reformiert, so dass ausgangsseitig ein Synthesegas bzw. Nutzgas zur Verfügung steht, welches überwiegend Kohlenmonoxid (CO) und Wasserstoff (H₂) enthält. Dieses Synthesegas bzw. Nutzgas kann aus der Reformerzone abgezogen und zur elektrischen Energieerzeugung mittels beispielsweise einer Verbrennungskraftmaschine genutzt werden. Tatsächlich lassen sich beispielsweise Ottomotoren problemlos mit einem Gemisch aus CO und H₂ betreiben, wie bereits die DE 2418 423 A1 der Firma Daimler Benz aus dem Jahre 1974 belegt.

Ein solcher Ottomotor oder allgemein eine Verbrennungskraftmaschine lässt sich problemlos mit einem Generator zur Energieerzeugung koppeln. Bevor das Nutzgas bzw. Synthesegas dem Ottomotor bzw. allgemein der Verbrennungskraftmaschine zugeführt wird, wird es abgekühlt und ggf. gereinigt. Dabei kann die Kühlung bzw. Abkühlung mit Hilfe eines Wärmetauschers erfolgen, dessen Abwärme zur Wassererwärmung genutzt wird. Zugleich mag der betreffende Wärmetauscher die Wärme von Abgas aus der Heizzone auf das hindurchgeführte Wasser übertragen, so dass ausgangsseitig des Wärmetauschers üblicherweise Wasserdampf zur Verfügung steht. Dieser Wasserdampf kann unmittelbar für die Reformierung in der Reformerzone genutzt werden.

Aus der Thennolysezone werden die Wärmeträgerkörper abgezogen und mit Hilfe einer oder mehrere Förderschnecken der Aufheizzone wieder zugeführt. Dabei sind die Wärmeträgerkörper unter anderem mit Anbackungen versehen, die aus der Thermolyse resultieren und die dortigen kohlenstoffhaltigen Rückstände darstellen. Bei der Rückführung der Wärmeträgerkörper bzw. allgemein des Wärmeträgermediums von der Thermolysezone in die Aufheizzone kann eine Siebung erfolgen. Dabei werden die Wärmeträgerkörper beispielsweise von Reststoffen getrennt. Diese Reststoffe, beispielsweise Thermolysekoks oder auch teerhaltige Reststoffe, werden aus Sicherheits- und Kostengründen getrennt von den Wärmeträgerkörpern in die Heizzone zurückgeführt und dort als Brennstoff für die Erhitzung des Wärmeträgermediums genutzt. Das Gleiche gilt für die unvermeidbaren Anbackungen an den Wärmeträgerkörpern in Gestalt von beispielsweise Thermolyseteer oder allgemein Thermolyseanbackungen, die ebenfalls in der Aufheizzone als Brennstoff genutzt werden.

Im Ergebnis werden ein Verfahren und eine Vorrichtung zur Vergasung von Biomasse beschrieben, die sowohl verfahrenstechnisch als auch hinsichtlich der benötigten Anlagebauteile besonders einfach und kostengünstig aufgebaut sind. Das lässt sich besonders darauf zurückführen, dass die Heizzone, die Reformerzone und die Thermolysezone gemeinsam in dem einzigen Vergasergehäuse untergebracht werden können. Die Trennung der einzelnen Zonen untereinander gelingt dabei ohne mechanische Barrieren, also barrierefrei. Je nach Bedarf und durch das Zusammenspiel des Wärmeträgermediums bzw. der Wärmeträgerkörper mit dem jeweiligen Sperrgas können die einzelnen Zonen gastechnisch voneinander separiert werden.

Dabei kann als (inertes) Sperrgas beispielsweise Abgas aus der Heizzone oder auch Abgas von der Verbrennungskraftmaschine genutzt werden, dass zudem über einen Katalysator zuvor gereinigt werden mag. Das heißt, das Abgas wird einer zusätzlichen Nutzung zugeführt. Darüber hinaus können die Wärme des Abgases aus der Heizzone und die Wärme des Abgases von der Verbrennungskraftmaschine vorteilhaft dazu genutzt werden, mittels eines Wärmetauschers zugeführtes Wasser in den dampfförmigen Zustand zu überführen. Der Wasserdampf lässt sich dann anschließend für die Reformierung nutzen und wird der Reformerzone zugeführt. Auf diese Weise wird die anfallende Abwärme optimal genutzt und ein besonders energieeffizienter Betrieb zur Verfügung gestellt.

Die Ausbildung der jeweiligen Übergangszone bzw. die gastechnische Trennung zwischen einzelnen Zonen kann anhand eines jeweils gemessenen Differenzdruckes zwischen den benachbarten Zonen eingestellt werden. So spricht ein hoher Differenzdruck für eine wirksame Trennung der einzelnen Zonen voneinander mit Hilfe des Sperrgases. Ein niedriger Differenzdruck erfordert jedoch eine erhöhte Zufuhr des Sperrgases zu der Übergangszone. Folglich kann der Differenzdruck als Führungsgröße für die Einstellung des Druckes des Sperrgases in der Übergangszone der benachbarten Zonen im Sinne einer Regelung eingesetzt werden. Das heißt, die einzelnen Zonen lassen sich problemlos voneinander trennen, wobei die jeweiligen Parameter wie der Differenzdruck oder die zuvor bereits angesprochenen Temperaturen im Schachtgehäuse bzw. Vergasergehäuse insgesamt von einer gemeinsamen Steueranlage ausgewertet werden, Diese Steueranlage mag für die gesamte Steuerung des Prozesses sorgen, beispielsweise auch für die Zufuhr von internen oder externen Brennstoffen in die Heizzone. Ebenso kann die Steueranlage die Geschwindigkeit des Umlaufes der Wärmeträgerkörper variieren. Darüber hinaus sorgt die Steueranlage für die Zufuhr der Biomasse und kann dadurch die Produktion an Nutzgas bzw. Synthesegas ausgangsseitig (in gewissen Grenzen) vorgeben.

Dabei lassen sich die unterschiedlichen Reaktionszeiten innerhalb der Zonen durch angepasste unterschiedliche Baulängen der Zonen innerhalb des Vergasergehäuses konstruktiv einstellen. Auf diese Weise wird ein insgesamt kontinuierlicher Fluss des Wanderbettes bzw. des Wärmetragermediums gewährfeistet und werden unterschiedliche Schütthöhen vermieden. Wie bereits beschrieben, kann durch die Steueranlage die Erzeugung des Nutzgases bzw. Synthesegases relativ präzise eingestellt werden. Das Synthese- bzw. Nutzgas ist schadstoffarm und lässt sich von der Verbrennungskraftmaschine problemlos nutzen, um über einen oder mehrere angeschlossene Generatoren elektrische Energie zu erzeugen.

Darüber hinaus werden die innerhalb des Vergasergehäuses bzw. während des durchlaufenen Prozesses anfallenden kohlenstoffhaltigen Rückstände im System genutzt, regelmäßig in die Heizzone zurückgeführt, um hier für die erforderliche Aufheizung des im Kreislauf geführten Wärmeträgermediums sorgen zu können. Dadurch lässt sich die Zufuhr externer Energie minimieren. Da darüber hinaus mit Temperaturen von ca. 1000 °C im Maximum in der Heizzone gearbeitet wird und die daran anschließende Reformerzone und die Thermolysezone bauartbedingt eine geringere Temperatur aufweisen (weil sich die Wärneträgerkörper beim Übergang von der Heizzone in die Reformerzone und schließlich die Thermolysezone abkühlen) sind technisch aufwendige und besonders zu isolierende Heizgaszuführungen oder allgemein eine besondere Hitzebeständigkeit entbehrlich. Zur Steigerung der Energieeffizienz trägt darüber hinaus bei, dass der benötigte Wasserdampf mit Hilfe der im Prozess ohnehin anfallenden Abwärme erzeugt wird. Dadurch entfällt eine separate Dampferzeugung, was den anlagentechnischen Aufwand verringert Zugleich wird die entstehende thermische Energie einer weiteren Nutzung zugeführt.

Die entstehenden kohlenstoffhaltigen Rückstände lassen sich mit Hilfe eines Filters, beispielsweise eines Elektro-Nassfilters, sammeln und separat aufkonzentrieren. Die darin enthaltene thermische Energie wird in der Heizzone für die Erhitzung des Wärmeträgermediums genutzt. Dadurch wird der Anfall an etwaigem Abwasser oder auch an Abgasen auf ein Minimum reduziert. Hierzu trägt ergänzend der Umstand bei, dass die Verbrennungskraftmaschine mit einem eigenen Katalysator ausgerüstet ist, der die dort entstehenden Abgase umweltgerecht aufbereitet Diese Abgase werden zusammen mit den Abgasen aus der Heizzone als Sperrgas genutzt. Schlussendlich läuft der gesamte Prozess bei minimalem Über- bzw. Unterdruck, so dass keine besonderen Erfordernisse an die Dichtigkeit des Vergasergehäuses gestellt werden müssen, was erneut den anlagentechnischen Aufwand minimiert. Außerdem ist die Zufuhr von geringfügiger Fremdluft unschädlich, weil diese ohnehin für den Verbrennungsprozess in der Heizzone erforderlich ist. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Vorrichtung schematisch und
- Fig. 2: die Vorrichtung, eingebettet in eine vereinfacht dargestellte Anlage zur elektrischen Energieerzeugung.

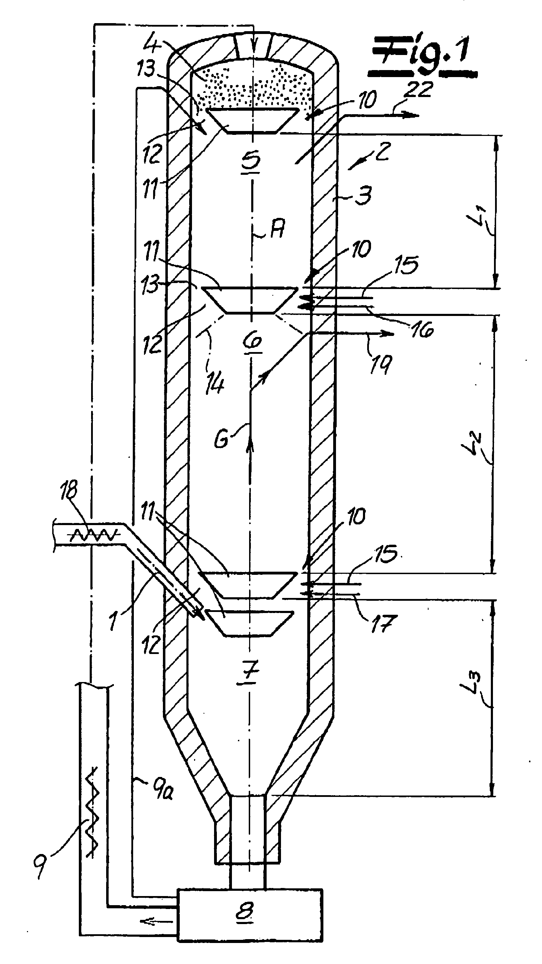

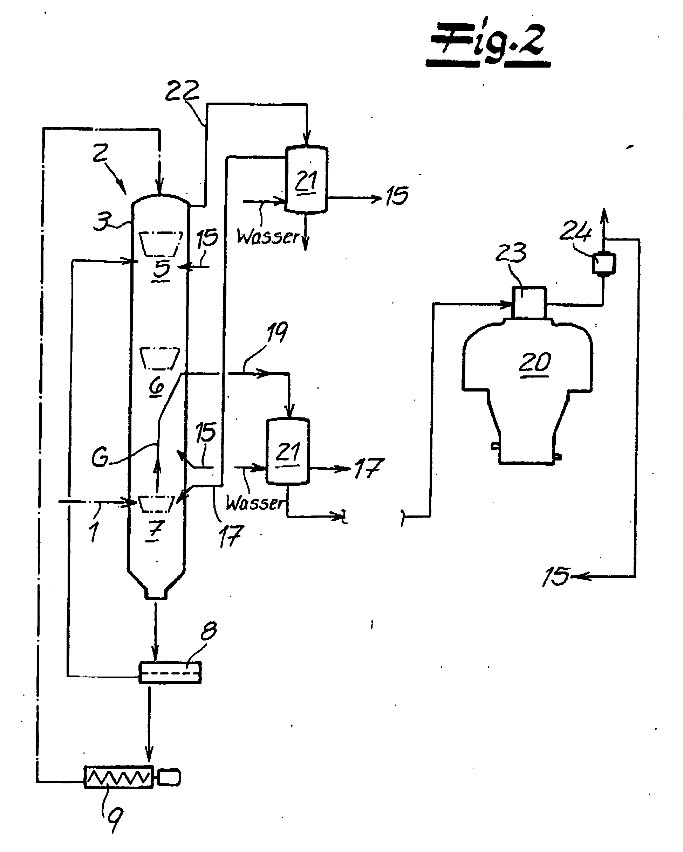

In der Fig. 1 ist eine Vorrichtung zur Vergasung von Biomasse 1 dargestellt. Es sollte betont werden, dass anstelle der Biomasse 1 grundsätzlich sämtliche organischen Materialien ähnlich behandelt und vergast werden können und die Biomasse 1 nur beispielhaft behandelt wird. Diese Vorrichtung verfügt über einen Schachtvergaser 2 mit einem Vergasergehäuse 3. In dem Schachtvergaser 2 wird ein Wärmeträgermedium im Kreislauf geführt, wie dies durch Pfeile in den Fig. 1 und 2 angedeutet wird. Das heißt, das Wärmeträgermedium stellt ein Wanderbett dar bzw. eine wandernde Schüttung aus meistens kugelförmigen Wärmeträgerkörpern 4. Die Wärmeträgerkörper 4 mögen im Ausführungsbeispiel und nicht einschränkend einen Durchmesser im Bereich von ca. 10 mm bis 15 mm aufweisen und aus Keramik hergestellt sein.

Das Wärmeträgermedium bzw. die Wärmeträgerkörper 4 werden in eine Heizzone 5 überführt und gelangen dann per Gravitation in eine darunter angeordnete Reformerzone 6 und schließlich eine Thermolysezone 7. Diese sämtlichen drei Zonen 5, 6, 7 sind in dem gemeinsamen Vergasergehäuse 3 in dessen Längserstreckung übereinander angeordnet und gehen ausweislich insbesondere der Fig. 1 barrierefrei ineinander über, d. h. es sind keine durchgängigen mechanischen Barrieren oder Absperrungen zwischen den einzelnen Zonen 5, 6, 7 vorhanden.

Nachdem die Wärmeträgerkörper 4 die Thermolysezone 7 passiert haben, werden sie fußseitig abgezogen und beispielsweise über ein angedeutetes Sieb 8 geführt, welches dazu dient, von den Wärmeträgerkörpem 4 eventuelle kohlenstoffhaltige Rückstände abzutrennen bzw. diese aus dem Wanderbett auszuschleusen. Die auf diese Weise abgetrennten kohlenstoffhaltigen Rückstände werden getrennt von den Wärmeträgerkörpern 4 in die Heizzone 5 geführt und dort verbrannt. Das deutet eine separate Fördereinrichtung 9a an, die zusätzlich zu einer Fördereinrichtung 9 für die Wärmeträgerkörper 4 realisiert ist. Tatsächlich werden die Wärmeträgerkörper 4 mit Hilfe der Fördereinrichtung 9, beispielsweise eines Schneckenförderers 9, von der Thermolysezone 7 in die Heizzone 5 zurückgeführt. Zu diesem Zweck ist die Fördereinrichtung 9 kopfseitig an die Heizzone 5 und regelmäßig luftdicht angeschlossen.

Zwischen den einzelnen Zonen 5, 6, 7 sind jeweils Überganszonen 10 realisiert. Im Bereich dieser Übergangszonen 10 findet sich wenigstens eine Schikane 11, mit deren Hilfe ein Freiraum 12 in dem Wärmeträgermedium bzw. dem Wanderbett ausgebildet wird. Tatsächlich handelt es sich bei diesem Freiraum 12 um einen Ringraum, welcher von der Wandung des Vergasergehäuses 3 bis zur Barriere 11 reicht und diese ringförmig umschließt. Um dies im Detail zu erreichen, handelt es sich bei der jeweiligen Barriere 11 um ein Einbauteil 11, welches im Beispielfall nach der Fig. 1 trichterförmig gestaltet und konzentrisch im Vergleich zu einer Rotationsachse A bzw. Zentralachse des rotationssymmetrischen Vergasergehäuses 3 angeordnet ist. Dadurch können die Wärmeträgerkörper 4 die Einbauten 11 lediglich im Bereich äußerer Ringspalte 13 passieren und bilden unterhalb der Einbauteile 11 kegelförmige Schüttungen 14. Auf diese Weise werden die Freiräume bzw. Ringräume 12 im Bereich der Übergangszonen 10 definiert.

Diese Freiräume bzw. Ringräume 12 weisen regelmäßig ein oder mehrere angeschlossene Zuleitungen 15, 16, 17 auf. Tatsächlich verfügt die Übergangszone 10 zwischen der Reformerzone 6 und der Heizzone 5 über eine Zuleitung 15 und eine Zuleitung 16. Über die Zuleitung 15 mag ein Sperrgas oder auch ein Brenngas zugeführt werden. Die Zuleitung 16 dient dagegen dazu, im Bedarfsfall Luft zuzuführen, um die Verbrennung in der Heizzone 5 zu steuern. Das Brenngas und die Luft dienen also dazu, den Verbrennungsvorgang innerhalb der Heizzone 5 kontrolliert ablaufen zu lassen, damit hier die Wärmeträgerkörper 4 gezielt aufgeheizt werden können, und zwar bis sie zunächst in einem Anfahrprozess eine Temperatur von ca. 1000 °C erreichen (Betriebstemperatur).

Dagegen sorgt das über die Zuleitung 15 zugeführte Sperrgas dafür, dass die Heizzone 5 und die Reformerzone 6 gastechnisch voneinander separiert sind. Hierzu trägt ergänzend die Schüttung aus den Wärmeträgerkörpem 4 bei. Denn durch die Schüttung wird eine Strömung des in der Thermolysezone 7 erzeugten Produktgases entsprechend der Pfeilrichtung G (durch eine Absaugung kopfseitig des Schachtvergasers bzw. im Bereich der Heizzone 5) behindert, Die auf diese Weise reduzierte Strömungsgeschwindigkeit des Produktgases entlang des Pfeiles G führt nun in Verbindung mit dem in den Freiraum 12 zugeführten Sperrgas dazu, dass die Reformerzone 6 und die Heizzone 5 gastechnisch voneinander separiert werden und auch separiert werden können. Dabei lässt sich über einen gemessenen Differenzdruck Δp zwischen den beiden Zonen 5, 6 feststellen, wie stark ein etwaiger noch verbleibender Gasstrom G des Produktgases ist. Je nach dem gemessenen Differenzdruck Δp kann die Zufuhr des Sperrgases entsprechend gesteuert werden. Die Zufuhr des Sperrgases wie auch die Messung des Differenzdruckes Δp und auch die Temperaturen innerhalb des Vergasergehäuses 3 lassen sich mit einer nicht ausdrücklich dargestellten Steueranlage verarbeiten.

Zwischen der Reformerzone 6 und der Thermolysezone 7 ist ebenfalls eine Übergangszone 10 realisiert. Diese verfügt entsprechend den zuvor bereits gemachten Erläuterungen erneut über eine Barriere bzw. ein Einbauteil 11, welches einen Freiraum bzw. Ringraum 12 in dem Wanderbett bzw. der wandernden Schüttung aus den Wärmeträgerkörpern 4 erzeugt. Auch an diesen Freiraum bzw. Ringraum 12 ist eine Zuleitung 17 angeschlossen. Über die Zuleitung 15 kann erneut ein Sperrgas zugeführt werden, welches die Reformerzone 6 gastechnisch von der Thermolysezone 7 trennt. Darüber hinaus lässt sich über eine Zuleitung 17 Wasserdampf zuführen, welcher für die Reformierung des in der Thermolysezone 7 entstehenden Produktgases in der Reformerzone 6 sorgt.

Anhand der Fig. 1 erkennt man schließlich, dass innerhalb der Thermolysezone 7 ein weiteres Einbauteil 11 zur Ausbildung eines zusätzlichen Freiraumes 12 vorgesehen ist. Dieses weitere Einbauteil 11 ermöglicht, dass die Biomasse 1 über einen an dieser Stelle angeschlossenen Schneckenförderer 18 zugeführt wird bzw. zugeführt werden kann. Zuvor mag die Biomasse 1 getrocknet und auf eine bestimmte Komgröße geschreddert werden, was allerdings nicht zwingend ist. Ebenso wenig zwingend ist natürlich das weitere Einbauteil 11 zur Ausbildung des zusätzlichen Freiraumes 12, weil die Biomasse 1 natürlich grundsätzlich auch dem ohnehin vorhandenen Freiraum 12 zugeführt werden kann. - Die einzelnen Zonen 5, 6, 7 sind hinsichtlich ihrer zugehörigen Gehäuselängen L₁, L₂ und L₃ so ausgelegt, dass sich unter Berücksichtigung der sich daraus ergebenden Abmessungen des Vergasergehäuses 3 die für die einzelnen Prozesse notwendigen Reaktionszeiten einstellen.

Die Vorgehensweise zur Vergasung der Biomasse 1 ist wie folgt. Zunächst werden die Wärmeträgerkörper 4 in einem Anfahrprozess ohne Zufuhr der Biomasse 1 auf ihre Betriebstemperatur (1000 °C) erhitzt. Das geschieht im Zuge einer so genannten Stützfeuerung, bei welcher beispielsweise ein Brenngas über die Zuleitung 15 der Heizzone 5 zugeführt und hier verbrannt wird. Mit Hilfe von über die Zuleitung 16 zugeführter Luft lässt sich die Verbrennung in der Heizzone 5 steuern. Bei diesem Vorgang werden die Wärmeträgerkörper 4 bereits im Kreislauf geführt, und zwar mit Hilfe unter anderem der Fördereinrichtung 9. Sobald die Wärmeträgerkörper 4 die erforderliche Betriebstemperatur (ca. 1000°C) erreicht haben, wird die Biomasse 1 mit Hilfe der Förderschnecke 18 dem Freiraum 12 innerhalb der Thermolysezone 7 zugeführt. Dabei kommt es zwischen den einzelnen Hohlräumen, die im Wanderbett gebildet werden, zu dem zuvor bereits beschriebenen Prozess der Thermolyse und der Entstehung des Produktgases wie der kohlenstoffhaltigen Rückstände. Die kohlenstoffhaltigen Rückstände können an den Wärmeträgerkörpern 4 anbacken und werden beispielsweise mit Hilfe des Siebes 8 teilweise entfernt bzw. aus dem Wanderbett herausgefiltert. Anschließend werden die kohlenstoffhaltigen Rückstände getrennt von der Fördereinrichtung 9 ggf. aufkonzentriert und in die Heizzone 5 überführt, und zwar mit Hilfe der zusätzlichen Fördereinrichtung 9a. In der Heizzone 5 werden die besagten Rückstände verbrannt, um die Wärmeträgerkörper 4 zu erhitzen.

Nachdem in der Thermolysezone 7 das Produktgas entstanden ist, steigt dieses entsprechend dem Pfeil G auf, weil das Produktgas kopfseitig des Vergasergehäuses 3 angesaugt wird. Demgegenüber bewegen sich die Wärmeträgerkörper 4 im Gegenstrom. Dabei sorgt die Übergangszone 10 zwischen der Thermolysezone 7 und der Reformerzone 6 dafür, dass das Produktgas gezielt in die Reformerzone 6 eintritt und auch eintreten kann. Denn ein über die Zuleitung 15 zugeführtes Sperrgas reguliert den Übergang des Produktgases von der Thermolysezone in die Reformerzone 6. Zugleich wird über die Zuleitung 17 Wasserdampf zugeführt, welcher für die Reformierung in der Reformerzone 6 wie beschrieben sorgt Als Folge hiervon wird in der Reformerzone 6 das Synthesegas bzw. Nutzgas produziert, welches im Wesentlichen Kohlenmonoxid und Wasserstoff enthält. Dieses Nutzgas bzw. Synthesegas lässt sich anschließend über eine Ableitung 19 abziehen und wird einer Verbrennungskraftmaschine 20 zugeführt (vgl. Fig. 2).

Bevor das Nutzgas bzw. Synthesegas die Verbrennungskraftmaschine 20 erreicht, wird das Gas mit Hilfe eines Wärmetauschers 21 gekühlt und kann zuvor auch noch aufbereitet werden. Über den Wärmetauscher 21 wird Wasser geführt, wobei der auf diese Weise erzeugte Wasserdampf dem Vergasergehäuse 3 über die Zuleitung 17 in der Reformerzone 6 wieder zugeführt wird.

Über eine Ableitung 22 kopfseitig des Vergasergehäuses 3 wird Abgas aus der Heizzone 5 abgeführt. Tatsächlich werden die dort entstehenden Abgase über einen anderen (zweiten) Wärmetauscher 21 geführt, wobei auch in diesem Fall Wasserdampf erzeugt wird, welcher erneut über die Zuleitung 17 der Reformerzone 6 zugeführt wird.

Die Verbrennungskraftmaschine 20 weist einen angeschlossenen Generator 23 auf, mit dessen Hilfe elektrische Energie erzeugt wird. Außerdem ist ein nachgeschalteter Katalysator 24 vorgesehen, welcher das von der Verbrennungskraftmaschine 20 erzeugte Abgas reinigt. Das Abgas der Verbrennungsmaschine 20 als solches wird ebenso wie das aus der Heizzone 6 über den Wärmetauscher 21 geführte Abgas jeweils als Sperrgas genutzt. Dieses Sperrgas wird den jeweiligen Zuleitungen 15 zugeführt.

Tatsächlich ist das Abgas bzw. das solchermaßen gebildete Sperrgas praktisch sauerstofffrei und folglich inert und eignet sich demzufolge hervorragend zur gastechnischen Trennung der einzelnen Zonen 5, 6 bzw. 6, 7 voneinander. Auf diese Weise wird nahezu die gesamte thermische Abwärme genutzt, nämlich für die Erzeugung des Wasserdampfes für die Reformerzone 6 und erfährt auch das Abgas eine zusätzliche Nutzung, nämlich als Sperrgas.

Mit Hilfe der Zuleitung 16 lässt sich die Luftzufuhr in die Heizzone 5 einwandfrei steuern, weil ansonsten das Vergasergehäuse 3 insgesamt luftdicht ausgelegt ist. Denn die Förderschnecke 18 für die Biomasse 1 ist ebenso luftdicht an das Vergasergehäuse 3 angeschlossen wie die Fördereinrichtung 9 für das Wärmeträgermedium.

Nicht ausdrücklich dargestellt, ist die Tatsache, dass in das Vergasergehäuse 3 selbstverständlich Zuschlagstoffe wie beispielsweise Kalziumhydrat oder andere Hydrate eingebracht werden können. Diese lassen sich vorteilhaft in das untere Drittel des Vergasergehäuses 3 einbringen, um dort primär entstehende Schadstoffe zu binden. Auch lassen sich entstehende kohlenstoffhaltige Schlämme oder Schüttgüter parallel zur Vergasung außerhalb des Vergasergehäuses 3 entsorgen. Darüber hinaus ist der Einsatz von Katalysatoren, z. B. Kalziumaluminaten während des Vergasungsprozesses und innerhalb des Vergasergehäuses 3 denkbar.

## Patentansprüche

1. Verfahren zur Vergasung von organischen Materialien wie z. B. Kunststoffen, Ersatzbrennstoffen und speziell von Biomasse (1), mit folgenden Verfahrensschritten:
- ein Wärmeträgermedium auf Feststoffbasis durchläuft in dieser Reihenfolge eine Heizzone (5), eine Reformerzone (6) und eine Thermolysezone (7) und wird anschließend in die Heizzone (5) zurückgeführt;
- in der Thermolysezone (7) wird das hier zugeführte organische Material durch Wärmekontakt mit dem Wärmeträgermedium in zumindest ein Produktgas und ein oder mehrere kohlenstoffhaltige Rückstände aufgespalten;
- das im Gegenstrom zum Wärmeträgermedium geführte Produktgas wird anschließend in der Reformerzone (6) mittels zugeführtem Wasserdampf reformiert und als Synthesegas abgezogen;
**dadurch gekennzeichnet, dass**
- sämtliche drei Zonen (5, 6, 7) in einem gemeinsamen Vergasergehäuse (3) ausgebildet werden, wobei zwischen den einzelnen Zonen (5, 6, 7) jeweils Übergangszonen (10) realisiert sind und im Bereich dieser Übergangszonen (10) wenigstens eine Schikane (11) sich befindet, mit deren Hilfe ein von einem Sperrgas beaufschlagter Freiraum (12) in dem Wärmeträgermedium ausgebildet wird, so dass
- die einzelnen Zonen (5, 6, 7) barrierefrei ineinander übergehen und lediglich bedarfsweise durch das Zusammenspiel des Wärmeträgermediums mit jeweils dem Sperrgas voneinander getrennt werden.

2. Verfahren nach Anspruch 1, **dadurch gekennzeichnet, dass** sich der Freiraum (12) bis zum Rand eines Vergasergehäuses (3) erstreckt und vorzugsweise ringförmig ausgebildet ist.

3. Verfahren nach Anspruch 1 oder 2, **dadurch gekennzeichnet, dass** das Wärmeträgermedium zunächst in einem Anfahrprozess ohne Zufuhr von Biomasse (1) auf seine Betriebstemperatur erhitzt und erst dann Biomasse (1) zur Vergasung zugeführt wird.

4. Verfahren nach einem der Ansprüche 1 bis 3, **dadurch gekennzeichnet, dass** die Heizzone (5) mit externen und/oder internen Brennstoffen zum Erhitzen des Wärmeträgermediums beaufschlagt wird.

5. Verfahren nach Anspruch 4, **dadurch gekennzeichnet, dass** als interne Brennstoffe die kohlenstoffhaltigen Rückstände aus im Wesentlichen der Thermolysezone (7) genutzt und ggf. in die Heizzone (5) überführt werden.

6. Verfahren nach einem der Ansprüche 1 bis 5, **dadurch gekennzeichnet, dass** das Synthesegas zur elektrichen Energieerzeugung mittels beispielsweise einer Verbrennungskraftmaschine (20) genutzt wird.

7. Verfahren nach einem der Ansprüche 1 bis 6, **dadurch gekennzeichnet, dass** das Synthesegas abgekühlt und ggf. gereinigt wird, wobei die Abwärme bei der Abkühlung vorteilhaft zur Erzeugung von Wasserdampf für die Reformierung genutzt wird.

8. Verfahren nach einem der Ansprüche 1 bis 7, **dadurch gekennzeichnet, dass** als Sperrgas sauerstoffarmes bzw. sauerstofffreies Abgas genutzt wird, beispielsweise Abgas der Verbrennungskraftmaschine (20) und/oder Abgas aus der Heizzone (6).

9. Vorrichtung zur Vergasung von organischen Materialien, wie z. B. Kunststoffen, Ersatzbrennstoffen und speziell von Biomasse (1), insbesondere zur Durchführung des Verfahrens nach einem der Ansprüche 1 bis 8, mit einem Schachtvergaser (2) mit Vergasergehäuse (3), durch welchen ein Wärmeträgermedium im Kreislauf geführt und nacheinander eine Heizzone (5), eine Reformerzone (6) und eine Thermolysezone (7) durchläuft,
**dadurch gekennzeichnet,dass**
sämtliche drei Zonen (5, 6, 7) in dem gemeinsamen Vergasergehäuse (3) angeordnet sind, wobei - zwischen den einzelnen Zonen (5, 6, 7) jeweils Übergangszonen (10) realisiert sind und im Bereich dieser Übergangszonen (10) wenigstens eine Schikane (11) sich befindet, mit deren Hilfe ein von einem Sperrgas beaufschlagter Freiraum (12) in dem Wärmeträgermedium ausgebildet wird, so dass
die einzelnen Zonen (5, 6, 7) barrierefrei ineinander übergehen und lediglich bedarfsweise durch das Zusammenspiel des Wärmeträgermediums mit jeweils dem Sperrgas voneinander getrennt werden.

10. Vorrichtung nach Anspruch 9, **dadurch gekennzeichnet, dass** wenigstens eine Zuleitung (15, 17) für Sperrgas an das Vergasergehäuse (3) im Bereich der Übergangszone (10) angeschlossen ist.

11. Vorrichtung nach Anspruch 9 oder 10, **dadurch gekennzeichnet, dass** einzelne Gehäuselängen (L₁, L₂ und L₃) der Zonen (5, 6, 7) nach Maßgabe der gewünschten Reaktionszeiten ausgelegt sind.

12. Vorrichtung nach einem der Ansprüche 9 bis 11, **dadurch gekennzeichnet, dass** als Wärmeträgermedium schüttfähige und hitzebeständige Festkörper, insbesondere Kugeln, aus beispielsweise Keramik, Stahl eingesetzt werden.

13. Vorrichtung nach einem der Ansprüche 9 bis 12, **dadurch gekennzeichnet, dass** das Synthesegas einer Verbrennungskraftmaschine (20) mit Katalysator (23) für die Abgase zur Umsetzung in elektrische Energie zugeführt wird.

## Claims

1. A method for gasification of organic materials, such as plastics materials, replacement fuels and specifically of biomass (1), said method comprising the following method steps:
- a solid-based heat transfer medium passes through, in this sequence, a heating zone (5), a reformer zone (6) and a thermolysis zone (7) and is then fed back into the heating zone (5);
- in the thermolysis zone (7) the organic material fed here is split into at least one product gas and one or more carbonaceous residues by thermal contact with the heat transfer medium;
- the product gas guided in countercurrent to the heat transfer medium is then reformed in the reformer zone (6) by means of fed water vapour and removed as synthesis gas;
**characterised in that**
- all three zones (5, 6, 7) are formed in a common gasifier housing (3),
- transition zones (10) being formed between each of the individual zones (5, 6, 7) and at least one baffle (11) being located in the region of these transition zones (10), with the aid of which baffle(s) a clearance (12) to which a seal gas is applied is formed in the heat transfer medium so that
- the individual zones (5, 6, 7) transition into one another in a barrier-free manner and are separated from one another merely temporarily by the interaction between the heat transfer medium and the seal gas.

2. The method according to claim 1, **characterised in that** the clearance (12) extends as far as the edge of a gasifier housing (3) and is preferably annular.

3. The method according to either claim 1 or claim 2, **characterised in that** the heat transfer medium is first heated in a start-up process, without feeding of biomass (1), to its operating temperature and only then is biomass (1) fed for gasification.

4. The method according to any one of claims 1 to 3, **characterised in that** external and/or internal fuels are applied to the heating zone (5) to heat the heat transfer medium.

5. The method according to claim 4, **characterised in that** the carbonaceous residues substantially from the thermolysis zone (7) are used as internal fuels and are optionally transferred into the heating zone (5).

6. The method according to any one of claims 1 to 5, **characterised in that** the synthesis gas is used to generate electrical energy, for example by means of an internal combustion engine (20).

7. The method according to any one of claims 1 to 6, **characterised in that** the synthesis gas is cooled and optionally purified, the waste heat advantageously being used during cooling to produce water vapour for the reforming process.

8. The method according to any one of claims 1 to 7, **characterised in that** waste gas which is low in oxygen of free from oxygen is used as seal gas, for example waste gas of the internal combustion engine (20) and/or waste gas from the heating zone (6).

9. A device for gasification of organic materials, such as plastics materials, replacement fuels and specifically of biomass (1), in particular for carrying out the method according to any one of claims 1 to 8, said device comprising a shaft gasifier (2) with a gasifier housing (3), through which a heat transfer medium is circulated and passes, in succession, through a heating zone (5), a reformer zone (6) and a thermolysis zone (7),
**characterised in that**
- all three zones (5, 6, 7) are arranged in a common gasifier housing (3),
- transition zones (10) being formed between each of the individual zones (5, 6, 7) and at least one baffle (11) being located in the region of these transition zones (10), with the aid of which baffle(s) a clearance (12) to which a seal gas is applied is formed in the heat transfer medium so that
- the individual zones (5, 6, 7) transition into one another in a barrier-free manner and are separated from one another merely temporarily by the interaction between the heat transfer medium and the seal gas.

10. The device according to claim 9, **characterised in that** at least one feed line (15, 17) for seal gas is connected to the gasifier housing (3) in the region of the transition zone (10).

11. The device according to either claim 9 or claim 10, **characterised in that** individual housing lengths (L₁, L₂ and L₃) of the zones (5, 6, 7) are designed in accordance with the desired reaction times.

12. The device according to any one of claims 9 to 11, **characterised in that** pourable and heat-resistant solids, in particular balls, for example made of ceramics or steel, are used as the heat transfer medium.

13. The device according to any one of claims 9 to 12, **characterised in that** the synthesis gas is fed to an internal combustion engine (20) having a catalytic converter (23) for the waste gases for conversion into electrical energy.

## Revendications

1. Procédé de gazéification de matières organiques, telles que par exemple des matières plastiques, des carburants de substitution et spécialement de biomasses (1), avec les étapes de procédé suivantes :
- un agent caloporteur sur base de solides traverse selon cette séquence une zone de chauffage (5), une zone de reformeur (6) et une zone de thermolyse (7) pour être renvoyée ensuite dans la zone de chauffage (5) ;
- dans la zone de thermolyse (7), la matière organique qui y est amenée est décomposée par contact de chaleur avec l'agent caloporteur en au moins un gaz produit et en un ou plusieurs résidus contenant du carbone ;
- le gaz produit ramené dans le courant inverse vers l'agent caloporteur est ensuite reformé dans la zone de reformeur (6) au moyen de vapeur d'eau alimentée, puis décanté en tant que gaz de synthèse ;
**caractérisé en ce que**
- toutes les trois zones (5, 6, 7) sont créées dans un boîtier de gazéificateur (3) commun,
- entre chacune des zones (5, 6, 7) étant réalisées des zones de transition (10) et dans la région desdites zones de transition (10) se trouvant au moins une chicane (11) à l'aide de laquelle un espace libre (12) exposé à un gaz d'arrêt se créé dans l'agent caloporteur, de sorte que les zones individuelles (5, 6, 7) transitent l'une vers l'autre sans barrière et ne soient séparées l'une de l'autre qu'en cas de besoin, par l'interaction de l'agent caloporteur avec respectivement le gaz d'arrêt.

2. Procédé selon la revendication 1, **caractérisé en ce que** l'espace libre (12) s'étend jusqu'au bord d'un boîtier du gazéificateur (3) et est conçu de préférence de forme annulaire.

3. Procédé selon la revendication 1 ou 2, **caractérisé en ce que** d'abord, l'agent caloporteur est échauffé à sa température de service, dans un processus de démarrage, sans apport de biomasse (1) et que ce n'est qu'après que de la biomasse (1) est amenée à la gazéification.

4. Procédé selon l'une quelconque des revendications 1 à 3, **caractérisé en ce que** la zone de chauffage (5) est exposée à des carburants de substitution externes et/ou internes, pour échauffer le fluide caloporteur.

5. Procédé selon la revendication 4, **caractérisé en ce qu'**on utilise comme carburants internes des résidus contenant du carbone provenant essentiellement de la zone de thermolyse (7) et on les transfère le cas échéant vers la zone de chauffage (5).

6. Procédé selon l'une quelconque des revendications 1 à 5, **caractérisé en ce qu'**on utilise le gaz de synthèse pour la génération d'énergie électrique au moyen de par exemple une machine à combustion interne (20).

7. Procédé selon l'une quelconque des revendications 1 à 6, **caractérisé en ce qu'**on refroidit et on purifie le cas échéant le gaz de synthèse, la chaleur dissipée lors du refroidissement étant avantageusement utilisée pour la génération de vapeur d'eau pour le reformage.

8. Procédé selon l'une quelconque des revendications 1 à 7, **caractérisé en ce qu'**on utilise en tant que gaz d'arrêt des effluents gazeux pauvres en oxygène ou exempts d'oxygène, par exemple des effluents gazeux d'une machine à combustion interne (20) et/ou des effluents gazeux de la zone de chauffage (6).

9. Dispositif pour la gazéification de matières organiques, telles que par exemple des matières plastiques, des carburants de substitution et spécialement de biomasses (1), notamment pour la réalisation du procédé selon l'une quelconque des revendications 1 à 8, avec un gazéificateur à cuve (2) avec des boîtiers de gazéificateur (3), à travers lesquels un fluide caloporteur est conduit en circuit et traverse successivement une zone de chauffage (5), une zone de reformeur (6) et une zone de thermolyse (7),
**caractérisé en ce que**
- toutes les trois zones (5, 6, 7) sont créées dans le boîtier de gazéificateur (3) commun,
- entre chacune des zones individuelles (5, 6, 7) sont réalisées des zones de transition (10) et dans la région desdites zones de transition (10) se trouve au moins une chicane (11) à l'aide de laquelle un espace libre (12) exposé à un gaz d'arrêt se créé dans l'agent caloporteur, de sorte que les zones individuelles (5, 6, 7) transitent l'une vers l'autre sans barrière et ne sont séparées l'une de l'autre qu'en cas de besoin, par l'interaction de l'agent caloporteur avec respectivement le gaz d'arrêt.

10. Dispositif selon la revendication 9, **caractérisé en ce qu'**au moins un conduit d'alimentation (15, 17) pour le gaz d'arrêt est raccordé sur le boîtier de gazéificateur (3) dans la région de la zone de transition (10).

11. Dispositif selon la revendication 9 ou 10, **caractérisé en ce que** des longueurs de boîtiers individuelles (L₁, L₂ und L₃) des zones (5, 6, 7) sont dimensionnées selon le critère des temps de réaction souhaités.

12. Dispositif selon l'une quelconque des revendications 9 à 11, **caractérisé en ce qu'**en tant qu'agent caloporteur, on utilise des solides déversables et thermorésistants, notamment des sphères, par exemple en céramique, en acier.

13. Dispositif selon l'une quelconque des revendications 9 à 12, **caractérisé en ce que** le gaz de synthèse est amené dans une machine à combustion interne (20) avec un catalyseur (23) pour les effluents gazeux, pour une transformation en énergie électrique.
